Europäisches Patentamt

European Patent Office

Office européen des brevets

(11) Veröffentlichungsnummer: **0 383 138**
**A2**

## (12) EUROPÄISCHE PATENTANMELDUNG

(21) Anmeldenummer: **90102221.0**

(22) Anmeldetag: **05.02.90**

(51) Int. Cl.5: **G02B 6/12, H04J 14/00**

(30) Priorität: **16.02.89 DE 3904752**

(43) Veröffentlichungstag der Anmeldung:
**22.08.90 Patentblatt 90/34**

(84) Benannte Vertragsstaaten:
**DE FR GB**

(71) Anmelder: **Siemens Aktiengesellschaft
Wittelsbacherplatz 2
D-8000 München 2(DE)**

(72) Erfinder: **Stein, Karl-Ulrich, Dr.
Isartalstrasse 14
D-8025 Unterhaching(DE)**

(54) Vorrichtung für den optischen Direktempfang mehrerer Wellenlängen.

(57)    2.1. Vorrichtungen für den optischen Direktempfang für mehrere Wellenlängen werden bislang aus diskreten Komponenten in Modulen mit Führung der optischen Wellen in freien Strahlengängen zwischen den einzelnen Funktionselementen ausgeführt. Die Kosten für diese Ausführungen sind für einen breiten Einsatz prohibitiv hoch. Es wird eine besonders kostengünstige Vorrichtung angegeben.

2.2. Die Vorrichtung besteht im wesentlichen aus einem auf einem Substrat (10) aus Silizium integrierten wellenleitenden Wellenlängendemultiplexer (3) zum Führen und Verteilen von in einem gemeinsamen Kanal (1) ankommenden Wellen ($\lambda_1$, $\lambda_2$, $\lambda_3$) auf verschiedene, zu integrierten optoelektronischen Detektoren (41, 42, 43) führende Kanäle (71, 72, 73). Eine Weiterbildung der Vorrichtung ist eine integrierte bidirektionale Funktionseinheit, bestehend aus integriertem Sender und integriertem Direktempfänger.

2.3. Anwendung in der optischen Nachrichtentechnik.

FIG 2

Die Erfindung betrifft eine Vorrichtung für den optischen Direktempfang mehrerer Wellenlängen nach dem Oberbegriff des Patentanspruchs 1.

Glasfasern bieten im Wellenlängenbereich um 1,3 und 1,6 μm Breite optische Fenster an, insbesondere im Verhältnis zu der durch die elektrische Modulation genutzten Bandbreite. Daher gibt es eine Reihe von Systemvorschlägen, die Fenster durch eine Vielzahl von modulierten Wellenlängen zu nutzen. Beim Empfänger wird dann die gewünschte Wellenlänge durch Überlagerungsempfang oder durch Direktempfang mit Filtern selektiert. Der Überlagerungsempfang bietet zwar die besten Eigenschaften für Übertragung. Sein Aufwand ist jedoch durch den abstimmbaren, extrem schmalbandigen lokalen Osizillator und Maßnahmen gegen Schwankungen in der Polarisation der übertragenen Wellen sehr hoch.

Kostengünstige Lösungen für Datenraten bis in den Bereich von 10 GBit/Sekunde - wie sie z.B. für die Fernseh- bzw. HDV-Verteilung benötigt werden - bietet der eingangs genannte Direktempfang.

Es ist bekannt, derartige Direktempfänger aus diskreten Komponenten oder in Modulen aufzubauen. Die optischen Wellen werden dabei zwischen den einzelnen Funktionselementen als freie Strahlen geführt. Die Kosten für diese Lösungen sind für den vorgesehenen breiten Einsatz prohibitiv hoch.

Aufgabe der Erfindung ist es, eine besonders kostengünstige Vorrichtung der eingangs genannten Art anzugeben.

Diese Aufgabe wird durch die im kennzeichnenden Teil des Patentanspruchs 1 angegebenen Merkmale gelöst.

Das bei der erfindungsgemäßen Vorrichtung verwendete Substrat besteht vorzugsweise aus Silizium (Anspruch 2).

Der erfindungsgemäße Demultiplexer ist vorzugsweise in oder auf einer flächenhaften wellenleitenden Schicht ausgebildet (Anspruch 3).

Gemäß einer vorteilhaften Ausgestaltung der erfindungsgemäßen Vorrichtung kann der Demultiplexer eine Struktur aus dielektrischen Streifenwellenleitern aufweisen (Anspruch 4). Die Streifenwellennleiter können beispielsweise in Form von Rippenwellenleitern ausgebildet sein. Sie können aber auch in Form von in Bereichen erhöhter Brechzahl im Substrat oder in der genannten flächenhaften wellenleitenden Schicht ausgebildet sein.

Bei einer anderen vorteilhaften Ausgestaltung der erfindungsgemäßen Vorrichtung weist der Demultiplexer ein wellenleitendes planares Prisma auf, dem die ankommenden Wellenlängen zugeleitet sind (Anspruch 5). Dieses Prisma kann durch eine Struktur höherer Brechzahl $n_2$ in der flächenhaften wellenleitenden Schicht niedrigerer Brechzahl $n_1$ definiert sein (Anspruch 6).

Gemäß einer weiteren vorteilhaften Ausgestaltung der erfindungsgemäßen Vorrichtung weist der Demultiplexer ein planares Beugungsgitter auf, dem die ankommenden Wellenlängen zugeleitet sind (Anspruch 7). Dieses Beugungsgitter kann auf oder in der flächenhaften wellenleitenden Schicht ausgebildet sein (Anspruch 8), beispielsweise in Form eines Oberflächengitters (Anspruch 9).

Bei einem erfindungsgemäßen Demultiplexer in Form einer Struktur aus dielektrischen Streifenleitern ist dieser vorzugsweise aus Richtkopplern aufgebaut (Anspruch 10).

Insbesondere bei den mit einem planaren Prisma oder Beugungsgitter gebildeten Demulitplexern ist es vorteilhaft, die ankommenden Wellenlängen über eine Kollimatorlinse in Form einer auf dem Substrat integrierten planaren Linse dem Demultiplexer oder den Detektoren zuzuleiten (Anspruch 11), wobei es auch zweckmäßig sein kann, wenn insbesondere die vom Demultiplexer ausgehenden Wellenlängen durch eine auf dem Substrat integrierte planare Sammellinse auf die zugeordneten Detektoren geleitet werden (Anspruch 12). Die planaren Linsen können nach dem Stand der Technik als Luneburg-Linsen, geodätische Linsen oder Fresnel-Linsen dargestellt werden (siehe Lee, D.L., Electromagnetic Principles of Integrated Optics, 1986, S. 268, Verlag John Wiley & Sons, New York).

Bei der erfindungsgemäßen Vorrichtung sind vorteilhafterweise die elektronischen Detektoren und erforderliche Impedanzwandler oder Vorverstärker für elektrische Signale auf dem Substrat integriert (Ansprüche 13 und 15).

Ein integrierter Detektor besteht vorteilhaft aus einer Schottky-Barriere-Diode mit einer an das Halbleitermaterial grenzenden Schottky-Kontaktschicht aus metallisch leitendem Material, bei der die Kontaktschicht durch Leckwellenkopplung an eine wellenleitende Schicht gekoppelt ist, in welcher eine Wellenlänge vom Demultiplexer zugeleitet ist (Anspruch 14). Derartige Dioden sind in der älteren deutschen Patentanmeldung P 39 00 422.8 (= VPA 89 P 1007 DE) auf Siliziumbasis beschrieben.

Ebenso ist es vorteilhaft, eine Faserhalterung und Justierung auf dem Substrat zu integrieren (Anspruch 16), die vorzugsweise eine geätzte V-Nut aufweist (Anspruch 17), in der eine Faser justiert und fixiert werden kann, die den Kanal für die ankommenden Wellenlängen bildet.

Vorteilhaft ist es auch, wenn auf dem Substrat eine Ankoppeloptik integriert ist (Anspruch 18), die bevorzugterweise eine Kugellinse aufweist, die in einer auf dem Substrat ausgebil deten V-Nut angeordnet ist (Anspruch 19).

Durch die erfindungsgemäße Vorrichtung ist eine kostengünstige optoelektronische Schaltung realisiert, bei der die optischen Wellen in vorzugsweise planaren Wellenleitern geführt und die erforderlichen optischen Funktionen durch planare optische Komponenten, wie Wellenleiter, Linsen, Prismen, Umlenkspiegel und Richtkoppler dargestellt sind.

Der besondere Vorteil der erfindungsgemäßen Vorrichtung besteht darin, daß sich die gesamten optischen Funktionen des Empfängers von einer Halterung einer Glasfaser bis zu den Vorverstärkern mit IC-kompatiblen Prozeßschritten in einem Silizium-Monolithen von weniger als 10x10 mm² Kantenlänge ohne jeden Montage- oder Abgleichschritt darstellen lassen. Damit besteht die Möglichkeit, Preis, Zuverlässigkeit und Raumbedarf für diese Funktionen bei Massenfertigung in eine Größenordnung zu bringen, wie sie für die Fernsehsignalverteilung vertretbar ist.

Die erfindungsgemäße Anordnung ist kompatibel in System- und Technologieaspekten mit einem aus der älteren deutschen Patentanmeldung P 38 33 211.2 (VPA 88 P 1700 DE) hervorgehenden Vorschlag für einen monolithisch integrierten bidirektionalen Modul.

Zur Realisierung eines derartigen Moduls ist eine erfindungsgemäße Vorrichtung vorteilhafterweise derart weitergebildet, daß auf dem Substrat ein Halbleiterlaser zum Erzeugen einer in den einen Kanal in Richtung entgegengesetzt zu den ankommenden Wellenlängen einzukoppelnden Wellenlänge aufgebracht ist (Anspruch 20).

Die vom Halbleiterlaser ausgesandte Wellenlänge kann vorteilhaft über einen auf dem Substrat integrierten optischen Richtkoppler in den einen Kanal gekoppelt werden, wobei über diesen Richtkoppler zugleich die ankommenden Wellenlängen zum Demultiplexer geleitet sind (Anspruch 21).

Es ist auch vorteilhaft, insbesondere bei Verwendung des zuletztgenannten Richtkopplers, die vom Halbleiterlaser ausgesandten Wellenlängen über einen auf dem Substrat integrierten Umlenkspiegel in den einen Kanal zu leiten (Anspruch 22).

Der Halbleiterlaser selbst wird in Form eines Chips auf dem Substrat fixiert (Anspruch 23), wobei der Halbleiterlaser beispielsweise ein DFB-Laser sein kann.

Vorteilhafterweise ist eine elektronische Schaltung zum Betrieb des Halbleiterlasers auf dem Substrat integriert (Anspruch 24).

Danach können bei der als bidirektionaler Sender-/Empfänger-Modul weitergebildeten erfindungsgemäßen Vorrichtung bis auf den Halbleiterlaser, der als Chip hybridiert wird, alle Elemente in oder auf dem Substrat aus dem insbesondere aus Silizium bestehenden Halbleitermaterial dargestellt werden.

Zur Überwachung der vom Halbleiterlaser abgestrahlten optischen Leistung ist vorteilhafterweise eine Monitordiode auf dem Substrat integriert (Anspruch 25).

Bei einer solcher Vorrichtung ist zwischen dem Halbleiterlaser und dem Demultiplexer ein Bereich für elektrische und optische Abschirmung auf dem Substrat vorzusehen (Anspruch 26).

Es ist zweckmäßig, die ankommenden Wellenlängen dem Demultiplexer durch ein auf dem Substrat integriertes Wellenlängenfilter zuzuleiten, das für die vom Laser ausgesandte Wellenlänge undurchlässig, für die ankommenden Wellenlängen dagegen durchlässig ist (Anspruch 27). Dieses Wellenlängenfilter ist vorteilhaft auf einem in Richtung zum Demultiplexer führenden Streifenwellenleiter ausgebildet (Anspruch 28).

Die Erfindung wird anhand der Figuren in der folgenden Beschreibung beispielhaft näher erläutert. Von den Figuren zeigen:

Figur 1 in einem Blockschaltbild den prinzipiellen Aufbau einer beispielhaften Vorrichtung für den optischen Direktempfang mehrerer Wellenlängen,

Figur 2 eine auf einem Substrat integrierte Ausführung der Vorrichtung nach Figur 1 für drei Wellenlängen, bei welcher der Demultiplexer aus planaren Prisma besteht und eine Kollimatorlinse vorgesehen ist,

Figur 3 eine der Figur 2 entsprechende Ausführung, bei welcher zusätzliche eine Sammellinse vorgesehen ist,

Figur 4 eine auf einem Substrat integrierte Ausführung der Vorrichtung nach Figur 1, bei welcher der Demultiplexer aus einem Beugungsgitter besteht und sowohl eine Kollimatorlinse als auch eine Sammellinse vorgesehen sind, die jeweils in Form einer Luneburg-Linse oder einer geodätischen Linse ausgeführt sind,

Figur 5 eine auf einem Substrat integrierte und zu einem Sende-/Empfangsmodul weitergebildete Vorrichtung nach Figur 1, bei welcher die Empfängerseite entsprechend der Figur 4 ausgebildet ist,

Figur 6 eine auf einem Substrat integrierte Vorrichtung nach Figur 1, bei welcher der Demultiplexer aus einer aus mehreren Richtkopplern bestehenden Struktur aus Streifenwellenleitern ausgebildet ist, und

Figur 7 in schematischer Schnittdarstellung einen Faserstecker und eine Buchse mit eingebauter erfindungsgemäßer Vorrichtung, die über eine Koppeloptik an die Faser des Steckers ankoppelbar ist.

Die Figuren sind nicht maßstäblich.

In den Figuren ist mit 1 der gemeinsame Kanal für die ankommenden mehreren Wellenlängen $\lambda_1$, $\lambda_2$, ..., $\lambda_n$, mit 2 ein Übergang zwischen dem gemeinsamen Kanal 1 und einem integrierten Wellenleiter, mit 3 der integrierte wellenleitende Wellenlängendemultiplexer, der die in dem gemeinsamen Kanal 1 ankommenden Wellenlängen $\lambda_1$, $\lambda_2$, .., $\lambda_n$ auf die mehreren getrennten, zu verschiedenen optoelektronischen Detektoren 41, 42, ..., 4n führenden Kanäle 71, 72, ..., 7n verteilt, und mit 51, 52, ...5n ausgangsseitig an die Detektoren angeschlossene Impedanzwandler oder Verstärker mit Ausgängen 61, 62, ..., 6n für elektrische Signale bezeichnet.

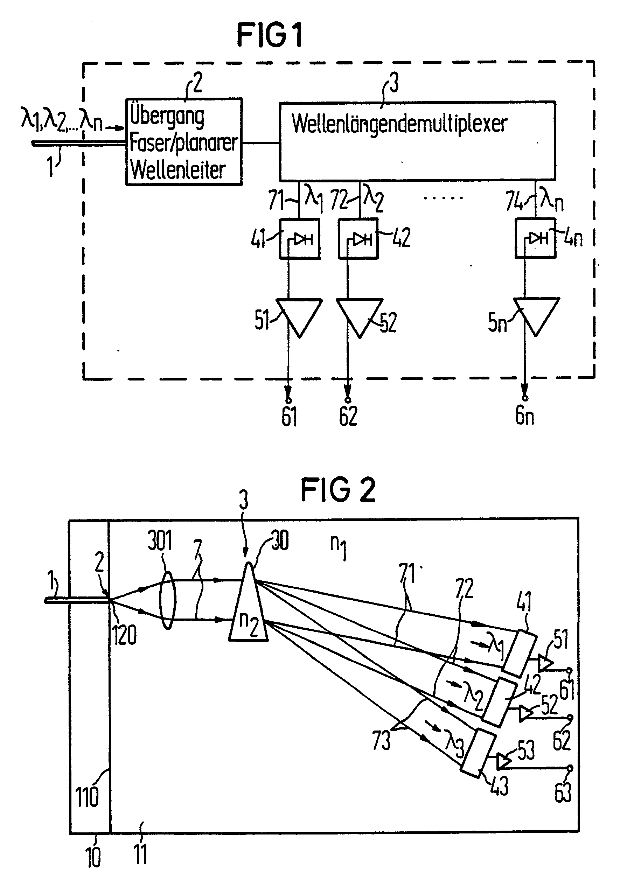

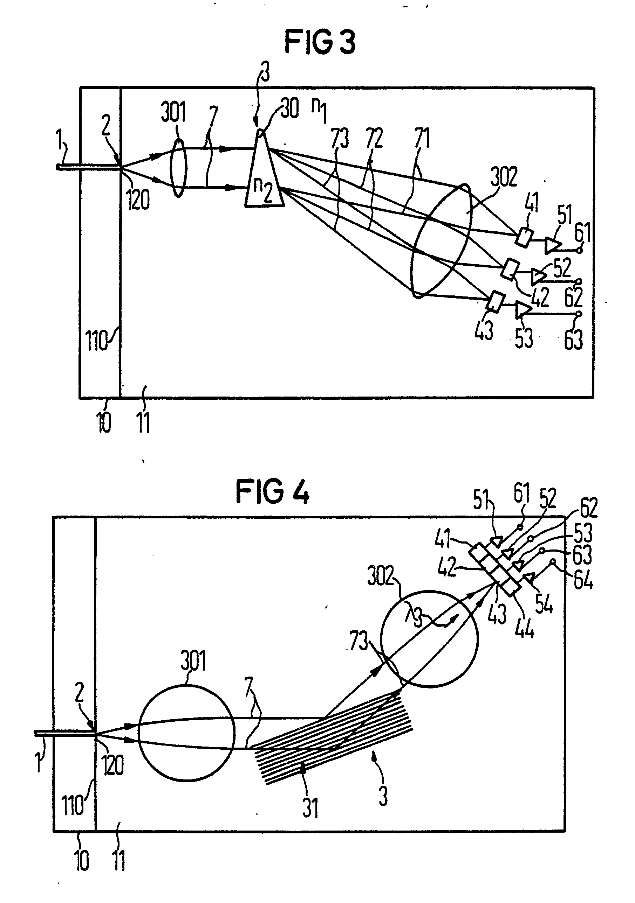

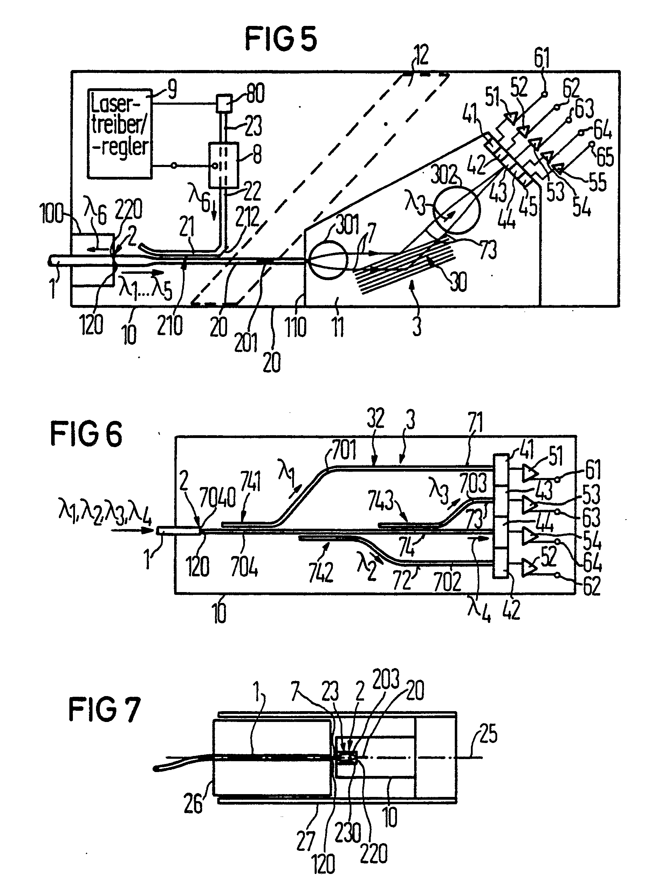

n bedeutet eine ganze Zahl größer 1, die speziell und ohne Beschränkung der Allgemeinheit für die Figuren 2 und 3 gleich 3, für die Figuren 4 und 6 gleich 4 und für die Figur 5 gleich 5 gewählt ist.

Der gemeinsame Kanal 1 ist bei den Ausführungsbeispielen nach den Figuren 2 bis 6 durch eine Glasfaser realisiert. Der Übergang 2 ist bei allen diesen Ausführungsbeispielen durch eine Stoßkopplung zwischen der Faser 1 und einem integrierten Wellenleiter 11, 20 oder 704 realisiert. Dies bedeutet, daß sich beim Ubergang 2 eine Stirnfläche der Faser 1 und eine Stirnfläche eines integrierten Wellenleiters 11, 20 oder 704 unmittelbar gegenüberliegen. So liegen sich bei den Ausführungsbeispielen nach den Figuren 2 bis 4 die Stirnfläche 120 der Faser 1 und die Stirnfläche 110 einer auf einem Substrat 10 integrierten flächenhaften wellenleitenden Schicht 11 gegenüber, während sich bei den Ausführungsbeispielen nach den Figuren 5 und 6 die Stirnfläche 120 der Faser 1 einer Stirnfläche 220 bzw. 7040 eines auf dem Substrat 10 integrierten Streifenwellenleiters 20 bzw. 704 gegenüberliegen.

Bei den Ausführungsbeispielen nach den Figuren 2 bis 5 ist der Demultiplexer 3 auf bzw. in einer auf dem Substrat 10 integrierten flächenhaften wellenleitenden Schicht 11 angeordnet. Bei den Beispielen nach den Figuren 2 und 3 besteht der Demultiplexer 3 aus einem planaren Prisma 30, das durch einen dreieckförmigen Bereich höherer Brechzahl $n_2$ in der flächenhaften wellenleitenden Schicht niedrigerer Brechzahl $n_1$ definiert ist.

Bei den Beispielen nach den Figuren 4 und 5 besteht der Demultiplexer 3 aus einem Beugungsgitter 31, das in oder auf der flächenhaften wellenleiteneden Schicht 11 realisiert ist, beispielsweise in Form eines Oberflächengitters auf dieser Schicht.

Beim Beispiel nach Figur 6 besteht der Demultiplexer 3 aus einer Struktur aus auf dem Substrat 10 integrierten dielektrischen Streifenwellenleitern 701 bis 704, die in Reihe hintereinander geschaltete, in bestimmter Weise wellenlängenselektive optische Richtkoppler 741 bis 743 definieren. Die dielektrischen Streifenwellenleiter 701 bis 704 können beispielsweise Rippenwellenleiter oder diffundierte oder ionenimplantierte streifenförmige Wellenleiter sein. Letztere können beispielsweise unter der Oberfläche des Substrats 10 oder in einer flächenhaften wellenleitenden Schicht auf dem Substrat 10 ausgebildet sein.

Bei den Beispielen nach den Figuren 2 bis 5 breitet sich die aus der Faser 1 in die flächenhafte wellenleitende Schicht 11 einkoppelte und die ankommenden Wellenlängen$\lambda_1$, $\lambda_2$, ..., $\lambda_n$ enthaltende optische Welle in einem divergenten Strahl 7 der Schicht 11 aus, so daß sich diese Welle zunehmend verbreitert. Dies ist im Hinblick auf die zu erzeugenden getrennten Kanäle 71, 72, ..., 7n ungünstig. Besser dafür geeignet sind kollimierte geführte Strahlen mit kleinem oder verschwindendem Divergenzwinkel oder konvergente Strahlen. Solche Strahlen können bei der flächenhaften wellenleitenden Schicht 11 durch eine oder mehrere im Strahlengang eines geführten divergenten Strahls angeordnete planare Linsen erzeugt werden, beispielsweise durch die genannten planaren Linsen des Standes der Technik.

Bei den Beispielen nach den Figuren 2 bis 5 ist beispielsweise im Strahlengang des divergenten Strahls 7 zwischen dem Übergang 2 und dem Demultiplexer 3 eine Kollimatorlinse 301 im Bereich der Schicht 11 angeordnet, die diesen Strahl 7 kollimiert, beispielsweise in Form eines Parallelstrahlenbündels.

Der kollimierte Strahl 7 ist dem Prisma 30 oder Beugungsgitter 31 zugeleitet, das diesen Strahl 7 in eine der Anzahl der ankommenden Wellenlängen entsprechende Anzahl verschiedener kollimierter, die verschiedenen Kanäle definierender Teilstrahlen 71, 72, ..., 7n auffächert, von denen jeder nur eine ankommende Wellenlänge $\lambda_1$, $\lambda_2$, ..., $\lambda_n$ enthält.

In einem Bereich der Schicht 11, in dem die aufgefächerten geführten Teilstrahlen bzw. Kanäle 71, 72, ..., 7n ausreichend räumlich voneinander getrennt sind, ist im Strahlengang jedes dieser Teilstrahlen ein zugeordneter Detektor 41, 42, .., 4n auf dem Substrat 10 integriert, beispielsweise in Form der erwähnten Schottky-Barriere-Diode.

Zur Verarbeitung der elektrischen Ausgangssignale der Detektoren 41, 42, ..., 4n erforderliche Impedanzwandler oder Verstärker 51, 52, ..., 5n sind ebenfalls auf dem Substrat integriert.

Beim Beispiel nach Figur 2 sind die Teilstrahlen bzw. Kanäle 71, 72, ...7n als Parallelstrahlenbündel den Detektoren zugeführt.

Bei den Ausführungsbeispielen nach den Figuren 3 bis 5 sind die Teilstrahlen bzw. Kanäle 71, 72, ..., 7n auf die Detektoren 41, 42, ..., 4n fokussiert.

Speziell ist es bei diesen Vorrichtungen so eingerichtet, daß der divergente Strahl 7 durch eine Kollimatorlinse 301 zu einem Parallelstrahl gebündelt wird, der dem Demultiplexer 3 zugeleitet ist und daß im Strahlengang der aufgefächerten Teilstrahlen bzw. Kanäle 71, 72, ..., 7n zwischen dem Demultiplexer und den Detektoren 41, 42, ..., 4n eine Sammellinse 302 in Form einer planaren Linse angeordnet ist, welche jeden dieser Teilstrahlen auf den zugeordneten Detektor fokussiert.

Dei dem die Struktur aus Streifenwellenleitern verwendendenden Ausführungsbeispiel nach Figur 6 sind die hintereinander geschalteten Richtkoppler 741, 742, 743 in Bezug auf ihre Wellenlängenselektivität beispielsweise derart bemessen, daß der erste Richtkoppler 741 von dem in den durchgehenden Streifenwellenleiter 704 eingekoppelten Wellenlängen $\lambda_1$ bis $\lambda_4$ die Wellenlänge $\lambda_1$ in den zum Detektor 41 führenden Streifenwellenleiter 701 einkoppelt. Der nächste Richtkoppler 742 koppelt beispielsweise die Wellenlänge $\lambda_2$ aus dem Wellenleiter 704 in den zum Detektor 42 führenden Streifenwellenleiter 702 aus. Der dritte Richtkoppler 743 koppelt beispielsweise die Wellenlänge $\lambda_3$ aus dem Wellenleiter 704 in den zum Detektor 43 führenden Streifenwellenleiter 703 aus. Die Wellenleiter 701 bis 703 und der zum Detektor 44 führende durchgehende Streifenwellenleiter 704 bilden die getrennten Kanäle 71, 72, 73 bzw. 74. Bei dem Beispiel können generell n getrennte Kanäle für n verschiedene Wellenlängen mit n-1 wellenlängenselektiven Richtkopplern erzeugt werden. Es können auch vorzugsweise Baumstrukturen mit in Zweigen angeordneten Richtkopplern verwendet werden.

Bei dem Beispiel nach Figur 5, das eine bidirektionale Funktionseinheit in Form eines Sende-/Empfangsmoduls für fünf ankommende Wellenlängen $\lambda_1$ bis $\lambda_5$ und eine Sendewellenlänge $\lambda_6$ darstellt, ist auf dem Substrat 10 ein Halbleiterlaser 8 in Form eines DFB-Laserchips fixiert, der die Sendewellenlänge $\lambda_6$ aussendet. Diese wird über einen integrierten optischen Richtkoppler 210 in die durch eine Faserhalterung und -fixierung 100 auf dem Substrat 10 fixierte Faser 1 eingekoppelt. Der Richtkoppler 210 besteht aus einem integrierten Streifenwellenleiter 21 und einem Abschnitt eines von der Faser 1 zur flächenhaften wellenleitenden Schicht 11 des Direktempfängers führenden integrierten Streifenwellenleiter 20. Das eine Ende 220 des Streifenwellenleiters 20 ist durch Stoßkopplung an die Faser 1 gekoppelt. Der Übergang von dem Streifenwellenleiter 20 zur Schicht 11 kann ebenfalls durch Stoßkopplung gebildet sein. Die Schicht 11 und der Wellenleiter 20 können auch aus einem Stück sein.

Die Wellenlänge $\lambda_6$ wird dem Wellenleiter 21 des Richtkopplers 210 durch einen integrierten Streifenwellenleiter 22 über einen integrierten Umlenkspiegel 212 zugeleitet, der die Sendewellenlänge $\lambda_6$ zum Wellenleiter 21 umlenkt.

Auf der Rückseite des Lasers 8 wird Laserlicht einer auf dem Substrat 10 integrierten Monitordiode 80 zugeleitet. Diese und der Laser 8 sind mit einem auf dem Substrat 10 integrierten elektronischen Lasertreiber/-regler 9 elektrisch leitend verbunden, der zusammen mit der Diode 80 zum Betrieb und zur Überwachung des Lasers 8 dient.

Zwischen dem Sender und dem Direktempfänger ist auf dem Substrat 10 ein Bereich 12 für elektrische und optische Abschirmung zwischen Sender und Empfänger vorgesehen. Zu dieser Abschirmung dient auch das auf dem Streifenwellenleiter 20 integrierte Wellenlängenfilter, das für die Wellenlängen $\lambda_1$ bis $\lambda_5$ durchlässig für die Sendewellenlänge $\lambda_6$ dagegen sperrend wirkt.

Der Richtkoppler 210 ist vorzugsweise ein wellenlängenselektiver Richtkoppler, der so bemessen ist, daß in ihm nur die Sendewellenlänge $\lambda_6$ überkoppelt.

Die Figur 7 zeigt im axialen Längsschnitt und schematisch einen Faserstecker 26 mit Faser 1 und eine Buchse 27 im ineinandergesteckten Zustand. In der Buchse 27 ist ein Substrat 10 gehaltert, auf dem eine nicht dargestellte erfindungsgemäße Vorrichtung, beispielsweise eine Vorrichtung nach Figur 5 oder auch nach Figur 6, integriert ist. In der Buchse 27 können auch noch andere Bauteile, beispielsweise ein elektrischer Energiespeicher, enthalten sein. Es können auch eine oder mehrere elektrische Leitungen von der Buchse 27 fort oder zu ihr hinführen, beispielsweise Leitungen, die mit den Ausgängen von Verstärkern oder Impedanzwandlern verbunden sind, oder/und Leitungen für eine Energiezufuhr. Für die Halterung des Substrats 10 in der Buchse 27 sind herkömmliche Techniken geeignet.

Der Übergang 2 zwischen Faser 1 und einem auf dem Substrat 10 integrierten Streifenwellenleiter, beispielsweise dem Wellenleiter 20, wird durch eine Ankoppeloptik 23 bewirkt, die auf dem Substrat 10 integriert ist und den von der Faser 1 divergent austretenden Lichtstrahl 7 auf den Streifenwellenleiter 20 fokussiert. Die Ankoppeloptik 23 kann zweckmäßigerweise aus einer Kugellinse 230 bestehen, die in einer auf dem Substrat 10 ausgebildeten und zum Streifenwellenleiter 20 führenden Nut 203 mit vorzugsweise V-förmigem Profil fixiert ist. Bei der Befestigung des Substrats 10 in der Buchse 27 ist darauf zu achten, daß nach dem Zusammenstecken von Buchse 27 und Kugellinse 230 und die Stirnfläche 220 des Streifenwellenleiters 20 auf der Achse 25 des Strahls 7 angeordnet sind. Bei der Fixierung der Kugellinse 230 in der Nut 203 ist bereits darauf zu achten, daß diese im richtigen Abstand von der Stirnfläche 220 des Streifenwellenleiters 20 angeordnet ist. Die Stirnflächen 120 und 220 der Faser 1 bzw. des Wellenleiters 20 sind dann im richtigen Abstand von der Kugellinse 230 angeordnet, wenn sich die Stirnfläche 120 der Faser 1 in einer Objektebene der Kugellinse 230 und die Stirnfläche 220 des Wellenleiters 20 in einer der Objektebene zugeordneten Bildebene der Linse 230 befinden.

Die Anordnung nach Figur 7 stellt eine kompakte, äußerst einfach handhabbare und wenig störanfällige Vorrichtung für den optischen Direktempfang dar, die mit herkömmlichen Steckverbindungselementen für Fasern einfach und kostengünstig herstellbar ist.

## Ansprüche

1. Vorrichtung für den optischen Direktempfang mehrerer Wellenlängen ($\lambda_1$, $\lambda_2$, ..., $\lambda_n$), wobei die in einem gemeinsamen Kanal (1) ankommenden Wellenlängen ($\lambda_1$, $\lambda_2$, ..., $\lambda_n$) auf mehrere getrennte, zu verschiedenen optoelektronischen Detektoren (41, 42, ..., 4n) führende Kanäle (71, 72, ... , 7n; 701, 702, 703, 704) verteilt sind,
**gekennzeichnet durch**
einen auf einem Substrat (10) aus Halbleitermaterial integrierten wellenleitenden Wellenlängendemultiplexer (3) zum Führen und Verteilen der ankommenden Wellenlängen ($\lambda_1$, $\lambda_2$, ..., $\lambda_n$) auf die verschiedenen Kanäle (71, 72, ...7n).

2. Vorrichtung nach Anspruch 1, **dadurch gekennzeichnet,** daß das Substrat (10) aus Silizium besteht.

3. Vorrichtung nach Anspruch 1 oder 2, **dadurch gekennzeichnet,** daß der Demultiplexer (3) auf oder in einer flächenhaften wellenleitenden Schicht (11) ausgebildet ist.

4. Vorrichtung nach Anspruch 1 oder 2, **dadurch gekennzeichnet,** daß der Demultiplexer (3) eine Struktur aus dielektrischen Streifenwellenleitern (701, 702, 703, 704) aufweist.

5. Vorrichtung nach einem der vorhergehenden Ansprüche, **dadurch gekennzeichnet,** daß der Demultiplexer (3) ein wellenleitendes planares Prisma (30) aufweist, dem die ankommenden Wellenlängen ($\lambda_1$, $\lambda_2$, ..., $\lambda_n$) zugeleitet sind.

6. Vorrichtung nach Anspruch 5, **dadurch gekennzeichnet,** daß das Prisma (30) durch eine Struktur höherer Brechzahl ($n_2$) in einer flächenhaften wellenleitenden Schicht (11) niedrigerer Brechzahl ($n_1$) definiert ist.

7. Vorrichtung nach einem der vorhergehenden Ansprüche, **dadurch gekennzeichnet,** daß der Demultiplexer (3) ein planares Beugungsgitter (31) aufweist, dem die ankommenden Wellenlängen ($\lambda_1$, $\lambda_2$, ..., $\lambda_n$) zugeleitet sind.

8. Vorrichtung nach Anspruch 7, **dadurch gekennzeichnet,** daß das Beugungsgitter (31) auf oder in einer flächenhaften wellenleitenden Schicht (11) ausgebildet ist.

9. Vorrichtung nach Anspruch 7 oder 8, **dadurch gekennzeichnet,** daß das Beugungsgitter (31) in Form eines Oberflächengitters ausgebildet ist.

10. Vorrichtung nach Anspruch 4, **dadurch gekennzeichnet,** daß die Struktur (32) aus dielektrischen Streifenwellenleitern (701, 702, 703, 704) einen wellenlängenselektiven Richtkoppler (741, 742, 743) aufweist.

11. Vorrichtung nach einem der vorhergehenden Ansprüche, **dadurch gekennzeichnet,** daß die ankommenden Wellenlängen ($\lambda_1$, $\lambda_2$, ..., $\lambda_n$) über eine Kollimatorlinse (301) in Form einer auf dem Substrat (10) integrierten planaren Linse dem Demultiplexer (3) oder den Detektoren (41, 42, ..., 4n) zugeleitet ist.

12. Vorrichtung nach einem der vorhergehenden Ansprüche, **dadurch gekennzeichnet,** daß eine vom Demultiplexer (3) ausgehende Wellenlänge ($\lambda_1$, $\lambda_2$, ..., oder/und $\lambda_n$) durch eine auf dem Substrat (10) integrierte planare Sammellinse (302) auf den zugeordneten Detektor (41, 42, ..., 4n) geleitet ist.

13. Vorrichtung nach einem der vorhergehenden Ansprüche, **dadurch gekennzeichnet,** daß die optoelektronischen Detektoren (41, 42, ..., 4n) auf dem Substrat (10) integriert sind.

14. Vorrichtung nach Anspruch 13, **dadurch gekennzeichnet,** daß der integrierte Detektor (41, 42, ..., 4n) aus einer Schottky-Barriere-Diode mit einer an das Halbleitermaterial grenzenden Schottky-Kontaktschicht aus metallisch leitendem Material besteht, bei der die Kontaktschicht durch Leckwellenkopplung an eine wellenleitende Schicht (11; 701, 702, 703) gekoppelt ist, in welcher eine Wellenlänge ($\lambda_1$, $\lambda_2$, ..., $\lambda_n$) vom Demultiplexer (3) zugeleitet ist.

15. Vorrichtung nach einem der vorhergehenden Ansprüche, **dadurch gekennzeichnet,** daß ein Impedanzwandler oder Vorverstärker (51, 52, ..., 5n) für elektrische Signale auf dem Substrat (10) integriert ist.

16. Vorrichtung nach einem der vorhergehenden Ansprüche, **dadurch gekennzeichnet,** daß eine Faserhalterung und -justierung (100) auf dem Substrat (10) integriert ist.

17. Vorrichtung nach Anspruch 16, **dadurch gekennzeichnet,** daß die Faserhalterung und -justierung (100) eine geätzte V-Nut aufweist.

18. Vorrichtung nach einem der vorhergehenden Ansprüche, **dadurch gekennzeichnet,** daß eine Ankoppeloptik ((3) auf dem Substrat (10) mit integriert ist.

19. Vorrichtung nach Anspruch 18, **dadurch gekennzeichnet,** daß die Ankoppeloptik (23) eine in einer auf dem Substrat (10) ausgebildeten V-Nut (203) angeordnete Kugellinse (230) aufweist.

20. Vorrichtung nach einem der vorhergehenden Ansprüche, **dadurch gekennzeichnet,** daß auf dem Substrat (10) ein Halbleiterlaser (8) zum Erzeugen einer in den gemeinsamen Kanal (1) in Richtung entgegengesetzt zu den ankommenden Wellenlängen (λ₁, λ₂, ..., λ₅) einzukoppelnden Wellenlänge (λ₆) aufgebracht ist.

21. Vorrichtung nach Anspruch 20, **dadurch gekennzeichnet,** daß die vom Halbleiterlaser (8) ausgesandte Wellenlänge (λ₆) über einen auf dem Substrat integrierten optischen Richtkoppler (210) in den gemeinsamen Kanal (1) gekoppelt ist, wobei über diesen Richtkoppler zugleich die ankommenden Wellenlängen (λ₁, λ₂, ..., λ₅) zum Demultiplexer (3) geleitet sind.

22. Vorrichtung nach Anspruch 20 oder 21, **dadurch gekennzeichnet,** daß die vom Halbleiterlaser (8) ausgesandte Wellenlänge (λ₆) über einen auf dem Substrat (10) integrierten Umlenkspiegel (212) in den gemeinsamen Kanal (1) geleitet sind.

23. Vorrichtung nach einem der Ansprüche 20 bis 22, **dadurch gekennzeichnet,** daß der Halbleiterlaser (8) in Form eines Chips auf dem Substrat (10) fixiert ist.

24. Vorrichtung nach Anspruch 23, **dadurch gekennzeichnet,** daß auf dem Substrat eine elektronische Schaltung zum Betrieb des Halbleiterlasers (8) integriert ist.

25. Vorrichtung nach Anspruch 23 oder 24, **dadurch gekennzeichnet,** daß eine Monitordiode (80) auf dem Substrat (10) integriert ist.

26. Vorrichtung nach einem der Ansprüche 20 bis 25, **gekennzeichnet durch** einen Bereich (12) für elektrische und optische Abschirmung zwischen dem Halbleiterlaser (8) und dem Demultiplexer (3) auf dem Substrat.

27. Vorrichtung nach einem der Ansprüche 20 bis 26, **dadurch gekennzeichnet,** daß die ankommenden Wellenlängen (λ₁, λ₂, ..., λ₅) dem Demultiplexer (3) durch ein auf dem Substrat (10) integriertes Wellenlängenfilter (201) zugeleitet sind, das für die vom Laser (8) ausgesandte Wellenlänge (λ₆) undurchlässig, für die ankommenden Wellenlängen (λ₁, λ₂, ..., λ₅) dagegen durchlässig ist.

28. Vorrichtung nach Anspruch 27, **dadurch gekennzeichnet,** daß das Wellenlängenfilter (201) auf einem in Richtung zum Demultiplexer (3) führenden Streifenwellenleiter (20) ausgebildet ist.

# FIG 1

$\lambda_1, \lambda_2, \ldots \lambda_n$ → 2 Übergang Faser/planarer Wellenleiter

1

3 Wellenlängendemultiplexer

71 $\lambda_1$   72 $\lambda_2$   . . . . .   74 $\lambda_n$

41 ▷⊢   42 ▷⊢   4n ▷⊢

51 ▽   52 ▽   5n ▽

61   62   6n

# FIG 2

3   301   7   30   $n_1$

2   $n_2$

71   72   41   51

120   $\lambda_1$

1   $\lambda_2$   42   61   52   62

73   $\lambda_3$   53

43   63

110

10   11

# FIG 3

# FIG 4

# FIG 5

Laser-treiber/-regler 9

80
23
8
22

λ6

λ6 220
100
2
21 212
210
20 201 110 11 3 30

λ1...λ5
120
10 210 20

1'

12

61
51 52 62
41 63
64
302 42 65
λ3 43 55
44 45 53 54

301 7
73

# FIG 6

32 3 71
701 41 51
λ1 703 61
2 7040 741 743 λ3 43 53
λ1,λ2,λ3,λ4 73 63
44
1 120 704 742 72 74 54 64
λ2 702 52
λ4 42 62

10

# FIG 7

1 7 23 2 203 20
25

26

27 230 220 10
120